# EUROPEAN PATENT APPLICATION

(11) **EP 2 463 171 A1**
(43) Date of publication of application: **13.06.2012**
(21) Application number: 10194111.0
(22) Date of filing: 08.12.2010
(51) Int. Cl.: B60W 20/00, B60K 6/48, B60K 6/365, B60K 6/547, B60W 10/02, B60W 10/06, B60W 10/08, B60W 10/10

(54) **A method for executing a gear change in a vehicle**

(71) Applicant: Saab Automobile AB, 461 80 Trollhättan (SE)
(72) Inventor: Freudenthaler, Pär, 44292 Romelanda (SE); Berndtson, Tobias, 467 91, Grastorp (SE)
(74) Representative: Haag, Malina Anna

(57) **Abstract**

The present invention relates to a method for executing a gear change in a vehicle. Said vehicle comprises first and second vehicle propelling machines (101, 102) and a first input gear set (180) and a first output gear set (108), each gear set (180, 108) having two numerically different gear ratios, which gear sets (180, 108) are coupled in series, such that each gear set (180, 108) has one gear ratio engaged in order to propel said vehicle, wherein said first input gear set (180) operates on both of said vehicle propelling machines (101, 102) and said first output gear set (108) operates on said second vehicle propelling machine (102). The method comprises the steps of:
- changing gear ratio in said first input gear set (180) in a numerically suitable direction, and
- changing gear ratio in said first output gear set (108) in a numerically opposite direction in relation to said first input gear set (180).

## Description

### Field of the invention

The present invention relates to a method for executing a gear shift in a vehicle transmission, and more particularly to a vehicle comprising more than one vehicle propelling machine.

### Background of the invention

In the process of developing vehicles having reduced fuel consumption and carbon dioxide emissions, vehicle powertrains with several propelling machines, of which one of these propelling machines most often is an electric machine operated through batteries, has become more and more common. Hereby, the primary propelling machine may be designed to propel the vehicle at its beneficial service conditions. For example, the primary propelling machine may be turned off at idle, during periods of deceleration and braking, and during periods of relatively low speed or light vehicle load operation, to thereby minimise efficiency losses incurred due to engine drag.

In order to run these machines smoothly together, in principle without the passenger knowing in which propelling mode using which machine(s) the vehicle is driven, a suitably adapted transmission is installed. The transmission is in turn suitably controlled by a vehicle computer. In order to achieve this, an automated kind of transmission is almost necessitated in these types of vehicles.

At the same time, energy losses within the powertrain including the transmission must be kept low in order to lower the overall fuel consumption. Therefore, it is advantageous to find a suitable combination of transmission and machines in each vehicle propelling mode.

The GETRAG Corporate Group has presented a hybrid electric vehicle transmission comprising a battery pack electrically connected to an electric motor, which in turn is directly connected to the vehicle transmission for propelling the vehicle by converting electric energy to mechanical motion. Moreover, there is provided an internal combustion engine which is also directly connected to the vehicle transmission for propelling the vehicle by converting liquid fuel to mechanical motion. Additionally, the internal combustion engine is directly coupled to a generator, which in turn is electrically connected to the battery pack, such that said batteries may be charged by the internal combustion engine.

Hence, there is provided a vehicle which at low speeds or short ranges may be propelled by the electrical motor. At higher speeds, here speeds over 80 km/h, the internal combustion engine may be used to increase the speed and/or the range of the vehicle, as well as charging the batteries independent of whether the electric motor is used or not.

However, there is a need for an alternative solution, in order to provide a vehicle which may be more cost effectively produced. Furthermore, the comfort and driveability of the vehicle must be kept at a high level or even be further improved due to the continuously increasing demands from the drivers. It is therefore an objective of the present invention to provide a transmission for a vehicle which is provided with several propelling machines which has good drivability and at the same time provides optimum propelling modes for a further reduction of the fuel consumption.

### Summary of the invention

The object is achieved according to the invention by a method for executing a gear change in a vehicle, wherein said vehicle comprises first and second vehicle propelling machines and a first input gear set and a first output gear set, each gear set having two numerically different gear ratios, which gear sets are coupled in series, such that each gear set has one gear ratio engaged in order to propel said vehicle, wherein said first input gear set operates on both of said vehicle propelling machines and said first output gear set operates on said second vehicle propelling machine, wherein the method comprises the steps of:
- changing gear ratio in said first input gear set in a numerically suitable direction, and
- changing gear ratio in said first output gear set in a numerically opposite direction in relation to said first input gear set.

Advantages with the present invention include for example that the vehicle may be driven by one of the vehicle propelling machines or by both of the vehicle propelling machines simultaneously. Optimal propelling modes may also be chosen which is accomplished by providing gear sets on both of the propelling machines. Hence, the fuel consumption may be reduced, thereby also reducing carbon dioxide emissions. Furthermore, by providing a method that apparently simultaneously change gear ratio in the first input gear set and in the first output gear set in numerically opposite directions, the vehicle may be driven in a smooth manner since a sufficient gear ratio is provided for all vehicle propelling modes. Also, the method provides for a vehicle that may have a reduced number of gear wheels arranged in the different gear sets as the mentioned simultaneous gear ratio shift enables for extra gear ratios, thus the transmission may be reduced in size. Such size reduction is advantageous since the space available in a vehicle having two vehicle propelling machines is even more reduced than in a traditional vehicle having only one engine. Furthermore, with the first output gear set operating on the first and the second vehicle propelling machines, the first and second vehicle propelling machines may cooperate with each other.

According to another aspect of the invention a launch clutch is arranged between said first vehicle propelling machine and said first input gear set, said method further comprising the steps of:
- disengaging said launch clutch before changing gear ratio in said first input gear set, and
- reengaging said launch clutch after changing gear ratio in said first output gear set.

By providing a launch clutch between the first input gear set and the first vehicle propelling machine, this enables the first vehicle propelling machine to be disengaged from the gear sets, such that said first input gear set may be shifted freely. Any type of gear set may be provided that enables a change of gear ratio. Reengaging the launch clutch thus enables the first vehicle propelling machine to propel the vehicle but with a changed gear ratio.

According to another aspect of the invention said second vehicle propelling machine is continuously propelling said vehicle when said first input gear set and said first output gear set are changing gear ratios in said numerically opposite directions.

Hereby the driver of the vehicle and its passengers may not experience any acceleration variation and the drivability and experience of the vehicle is hence improved. In a vehicle having a manual transmission the driver is busy changing gear ratio when such acceleration variations occur and is consequently not so much disturbed by them. When on the other hand, driving a vehicle having an automated transmission, such variations come more as a surprise and the driver and passengers may find them disturbing, unless the vehicle, as in the present embodiment, is designed to minimise such variations.

According to another aspect of the invention said first output gear set comprises a clutch arrangement, wherein the method comprises the step of:
- changing gear ratio in said first output gear set by slipping said clutch arrangement, such that said first output gear set is continuously transferring a torque through said first output gear set.

When the first vehicle propelling machine is disengaged from the gear sets, the second propelling machine continuously propels the vehicle, and in combination with changing gear ratio in the first output gear set by slipping the clutch arrangement, the torque transferred through the first output gear set may be remained at an approximately equal level compared to prior disengaging the launch clutch. Hereby, the vehicle will be propelled in a smooth and comfort manner. Also, due to the continuous torque transferred through the first output gear set, the fuel consumption may be reduced, especially when driving in steep slopes where it is important to provide a continuous torque to the wheels of the vehicle.

According to another aspect of the invention said clutch arrangement comprises first and second clutches, one for each gear ratio in said first output gear set, the method further comprises the step of:
- slipping each one of said first and second clutches in opposite engagement directions such that one gear ratio is continuously transferred into the other gear ratio.

By having two clutches a controlled gear ratio shift may be achieved.

According to another aspect of the invention the method further comprises the step of:
- starting propelling said vehicle with said second vehicle propelling machine if only said first vehicle propelling machine is propelling said vehicle, before changing gear ratios.

If the second vehicle propelling machine is in a non-propelling mode when the launch clutch is prepared to disengage the first vehicle propelling machine from the gear sets, the second vehicle propelling machine may shift mode to start propelling the vehicle. Hereby, the torque transferred through the first output gear set may be remained at an approximately equal level compared to prior disengaging the launch clutch.

According to another aspect of the invention said vehicle is provided with only two vehicle propelling machines.

Hereby optimal drivability and fuel economy is combined with a reduced cost for propelling machines as seen in relation to prior art vehicles. Furthermore, the space needed to house the propelling machines is limited and by having only two vehicle propelling machines the needed space is reduced.

According to another aspect of the invention said first vehicle propelling machine is an internal combustion engine.

By providing at least 4 gears to the internal combustion engine, a sufficient drivability is provided to allow a pure engine mode of driving, useable e.g. if the vehicle is started after having been parked for a long time in cold weather with low powered batteries, or if driving under tough conditions, such as extremely hilly roads, where the electric machine may not be able to give sufficient power over time.

According to another aspect of the invention said second vehicle propelling machine is an electric machine functioning both as motor and generator.

This vehicle propelling machine thus has two objectives. Thereby only one machine in stead of two may be used and a more cost effective vehicle may be produced.

According to another aspect of the invention said first input gear set is an automated manual gear set.

Such a type of gear set is simple in design.

According to another aspect of the invention said first output gear set is a planetary gear set.

A planetary gear set is compact in its design which is advantageous when providing a vehicle with two vehicle propelling machines, and also enables to change gears without any disruption of momentum.

### Brief description of the drawings

The above, as well as additional objects, features and advantages of the present invention, will be better understood through the following illustrative and non-limiting detailed description of preferred embodiments of the present invention, with reference to the appended drawings, where the same reference numerals will be used for similar elements, wherein:
Fig. 1 schematically illustrates a gear arrangement for a hybrid electric vehicle according to the invention,
Fig. 2 schematically illustrates an alternative gear arrangement for a hybrid electric vehicle according to the invention,
Fig. 3a - 3e schematically illustrate the different steps of the method for executing gear changes in the hybrid electric vehicle of the invention, and
Fig. 4 is a flow-chart schematically illustrating the method when changing from the second gear to the third gear.

### Detailed description of preferred embodiments

The present invention relates to vehicles in general, but more specifically to passenger cars of a size between two to nine passengers, including a driver.

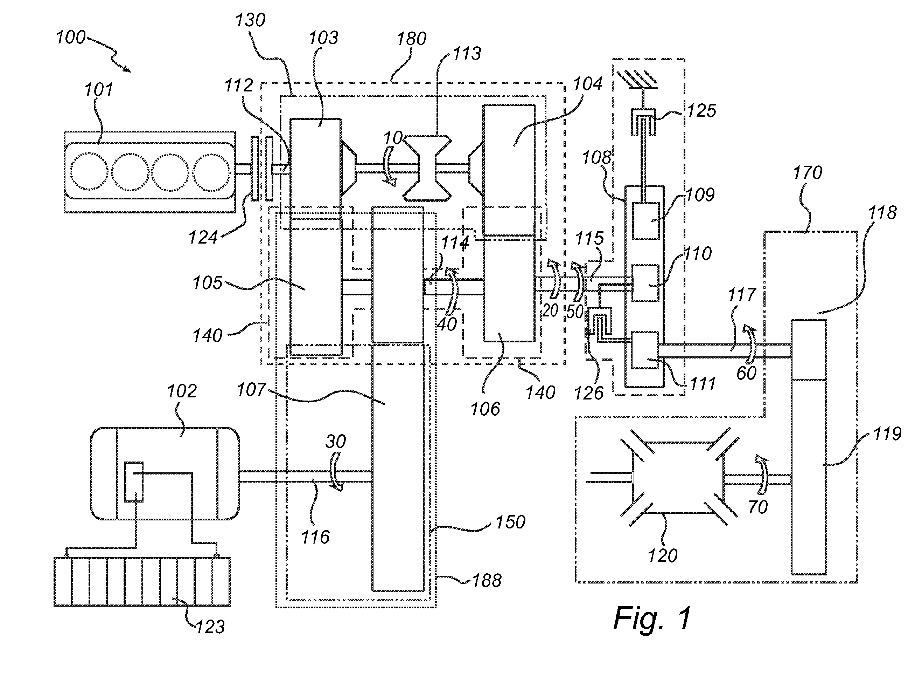

Figure 1 schematically illustrates a gear arrangement for a hybrid electric vehicle, such as a passenger car, which comprises a first input gear set 180, a second input gear set 188 and a first output gear set 108, wherein the first input gear set 180 is connected in series with said first output gear set 108. In more detail the first input gear set comprises a first input member 130, which is arranged to receive a first input torque 10 from an engine 101, such as an internal combustion engine (ICE). The first input gear set is further arranged to transmit the first torque to a first output member 140 of the first input gear set under a selectable first or second resulting gear ratio. In other words, the first output member 140 is arranged to receive a first output torque 20, which is equal to the first input torque being acted on by the first or second resulting gear ratio. In yet more detail, the first input member 130 comprises a first input shaft 112, as well as first input gear wheel 103 and a second input gear wheel 104 arranged on the input shaft. A moveable locking device 113 or a shift sleeve is provided on the shaft 112, for selectively engaging with the first and second input gear wheels 103, 104, and thereby selectively providing a locking engagement between the first input gear wheel and the first input shaft 112, and between the second input gear wheel and the first input shaft 112, respectively. The locking engagement between a gear wheel and a shaft translates a rotating motion of the gear wheel to the shaft.

Moreover, the first output member 140 comprises a first output shaft 114, as well as first output gear wheel 105 and a second output gear wheel 106 arranged on the first output shaft 114. The first output gear wheel 105 meshes or engages with the first input gear wheel 103, and the second output gear wheel 106 meshes or engages with the second input gear wheel 104, respectively. Consequently, a first torque 10 received by the first input shaft 112 may be transmitted to the first output shaft either via the first input gear wheel 103 and the first output gear wheel 105, during which it is acted on by the first resulting gear ratio, or via the second input gear wheel 104 and the second output gear wheel 106, during which it is acted on by the second resulting gear ratio.

There are alternative ways of providing the first and second gear ratios, e.g. by use of a planetary gear set or by use of a continuously variable transmission (CVT).Turning to the second input gear set, it comprises a second input member 150, which is arranged to receive a second input torque 30 from an electric machine 102, such as an electric motor/generator. The electric motor/generator is electrically connected to an energy storage device 123 or battery, such that electric energy stored in the battery may be provided to the motor/generator and converted into a torque 30 provided to the second input member 150. The second input gear set is further arranged to transmit the second torque 30 to a second output member 140 of the second input gear set under a third resulting gear ratio. In other words, the second output member 140 is arranged to receive a second output torque 40 equal to the second input torque being acted on by the third resulting gear ratio. In yet more detail, the second input member 150 comprises a second input shaft 116, as well as third input gear wheel 107 arranged on the second input shaft. Moreover, the second output member 140 comprises a second output shaft 114, as well as a third output gear wheel 105 arranged on the second output shaft. The third output gear wheel 105 meshes or engages with the third input gear wheel 107. Consequently, a second input torque 30 received by the second input shaft 116 may be transmitted to the second output shaft via the second input gear wheel 107 and the second output gear wheel 105 during which it is acted on by the third resulting gear ratio.

Further, both first output shaft and the second output shaft 114 are connected to a third input shaft 115 of the first output gear set 108. According to one example, and as illustrated in Figure 1, the first and second output shafts and the third input shaft are one and the same. Moreover, the first output shaft and the second output shaft are also one and the same; as well as the first output gear wheel and the second output gear wheel, which are also one and the same.

Turning to the first output gear set 108, it comprises a third input member 115, which is arranged to receive a third input torque 50. The first output gear set 108 is further arranged to transmit the third input torque 50 to a third output member 170 of the first output gear set 108 under a fourth and fifth resulting gear ratio. In other words, the third output member 170 is arranged to receive a third output torque 60 equal to the third input torque 50 being acted on by the fourth or fifth resulting gear ratio. In yet more detail, the first output gear set 108 may be a planetary gear set, comprising a first, second and third node 109, 110, 111, wherein the first node 109 may be a ring gear, the second node 110 may be a sun gear, and the third node 111 a planetary carrier. The fourth gear ratio may be provided by locking the ring gear to a stationary member by means of a first clutch 125. The fourth gear ratio may be provided by locking the sun gear and the planetary carrier to each other by means of a second clutch 126, resulting in a fifth gear ratio equal to 1:1.

In more detail the third output member may have a final gear set, comprising a final input gear wheel 118 arranged on a fourth input shaft 117 being the same as the third output shaft, and a final output gear wheel 119 arranged on a fourth output shaft, wherein the final input gear wheel and the final output gear wheel meshes or engages with each other so as to transmit a rotating motion from the fourth input shaft to the fourth output shaft. The final input gear wheel 118 and the final output gear wheel 119 are arranged to provide a sixth gear ratio from the fourth input shaft 117 to the fourth output shaft 122 in the form of an output torque 70. The fourth output shaft is further connected to a differential 120. The differential 120 is adapted to be connected to wheels of the hybrid electric vehicle in a generally known manner.

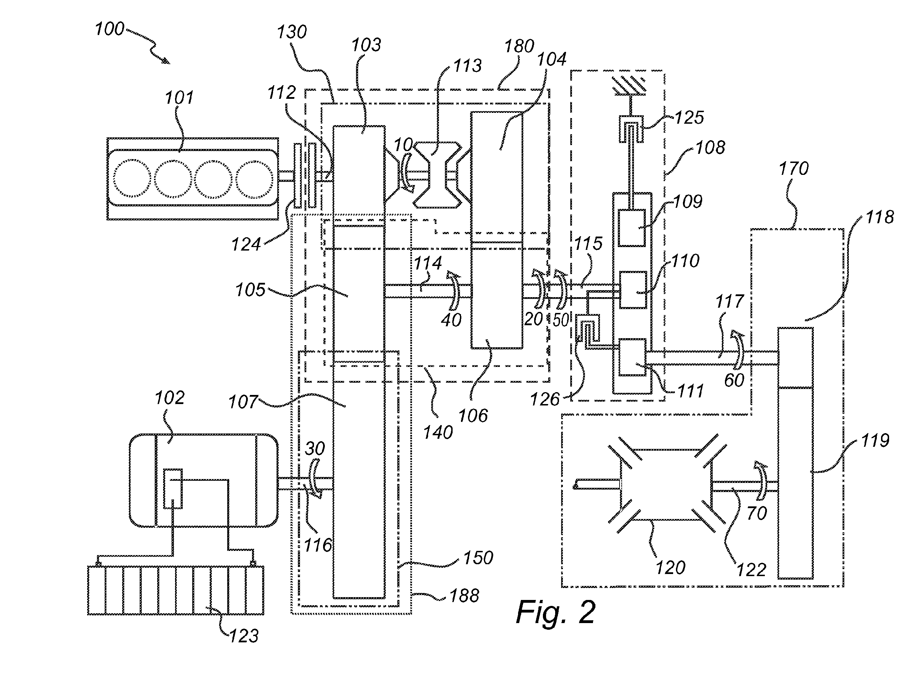

An alternative embodiment is schematically illustrated in Figure 2. The embodiment illustrated in Figure 2 is identical to the one described in relation to Figure 1, except that the third output gear wheel 208 and the first output gear wheel 105 are not one and the same. The third output gear wheel 208 is instead a separate gear wheel, arranged between the first output gear wheel 105 and the second output gear wheel 106 on the first output shat 114. The first output shaft being the same as the second output shaft. Consequently, the third input gear wheel does not engage with the first output gear wheel 105, but with the third output gear wheel 208.

The following description of e.g. different driving modes, all descriptions relate both to the gear arrangement described in relation to Figure 1 as well as the gear arrangement described in relation to Figure 2. In an pure electric mode of driving a second input torque 30 provided to the second input member may be transmitted to the third output member 170, via the second input gear wheel and the second output gear wheel 105 or 208, wherein the second input gear set acts on the second input torque by a resulting third gear ratio, thus providing a second output torque 40. Additionally, the first output gear set may be set to act on the second output torque by a fourth gear resulting ratio or a fifth resulting gear ratio, thus providing a third output torque 60 to the third output member 117. Consequently, there is provided two effective gears to the electric motor: one wherein the third and fourth resulting gears act on the second torque; and another wherein the third and fifth resulting gears act on the second torque.

In an pure engine mode of driving, a first input torque 10 provided to the first input member may be transmitted to the output member 170, via the first input gear wheel 103 and the first output gear wheel 105, wherein the first input gear set 180 acts on the first input torque 10 by a resulting first gear ratio, thus providing a first output torque 20. Alternatively, a first input torque 10 provided to the first input member 130 may be transmitted to the first output member 140, via the second input gear wheel 104 and the second output gear wheel 106, wherein the first input gear set acts on the first input torque 10 by a resulting second gear ratio. Additionally, the first output gear set 108 may be set to act on the first output torque by a resulting fourth gear ratio or a resulting fifth gear ratio, thus providing a third output torque 60 to the third output member 170. Consequently, there are provided four gears to the ICE: one wherein the first and fourth resulting gear ratios act on the first input torque; one wherein the second and fourth resulting gear ratios act on the first input torque; one wherein the first and fifth resulting gear ratios act on the first input torque and one wherein the second and fifth resulting gear ratios act on the first torque.

In the following description, these four gears are named first, second, third and fourth gear respectively in this order. Through the entire description the gear ratio is described as Uᵢₙ:Uₒᵤₜ, *i.e.* a numerically low gear ratio provides a low speed, but a high torque of the vehicle, and a numerically high gear ratio provides a high speed, but a low torque of the vehicle. Hence, the first gear provides the lowest gear ratio between the vehicle and the ground, and the second, third and fourth gears each provide a higher gear ratio between the vehicle and the ground, in this order, such that the fourth gear is the highest gear ratio. The first gear is adapted for starting propelling the vehicle from a stand-still, whereas the fourth gear is adapted for high speed continuous driving.

In a hybrid mode of operation, a first input torque 10 provided to the first input member 130 and a second input torque 30 provided to the second input member 150 may simultaneously be applied to the third output member 170 in a similar way as described in relation to the pure electric mode and the pure ICE mode above. In this mode the same resulting gear, i.e. the fourth or the fifth resulting gear, acts on both the electric machine and the engine.

In an ICE slip starting mode of operation, electric energy is converted by the electric machine 102 to a second input torque 20 provided to the second input member. The second torque is transferred to the first input member 130 and the first input shaft, via the second output gear wheel 105; 208, and the first or second input gear wheels 103, 104. Thereafter, the engine is started by slip clutch action, using a clutch 112 connecting the engine to the first input member 112.

In a charging mode of operation, the motor/generator acts as a generator. A first input torque 10 is provided to the first input member 130 and is transferred to the second input member 150 via the first input and output gear wheels 103, 105, or the second input and output gear wheels 104, 106; and thereafter via the third output and input gear wheels. The electric machine converts the torque or power received by the second input member to electric energy which is stored in the battery.

In a regenerative braking mode of operation, the motor/generator acts as a generator. A third torque is provided to the third output member 170 and is transferred to the third input member 115 and thereafter to the second input member 150 via the third output and input gear wheels. The electric machine converts the torque received by the second input member to electric energy which is stored in the battery.

The charging mode of operation and the regenerative braking mode of operation may be performed simultaneously.

The charging mode of operation may be performed simultaneously with the ICE driving mode of operation, by e.g. applying a suitable voltage to the electric machine. In other words, the third output member 170 receives a first torque 60 from the engine as described in relation to the ICE only driving mode of operation, simultaneously as the electric machine receives a second torque 30 from the engine as described in relation to the charging mode of operation. In other words, a first input torque 10 from the first input member is simultaneously transmitted to the third output member 170 as a first torque portion 60, and to the second input member as a second torque portion 30.

In the following, the method for executing gear changes in the above mentioned hybrid electric vehicle is described. The vehicle has four gears, each gear having its own gear ratio. The following will therefore describe the gear ratios for the first input gear set 180 and the first output gear set 108 in terms of numerically lower/higher gear ratios.

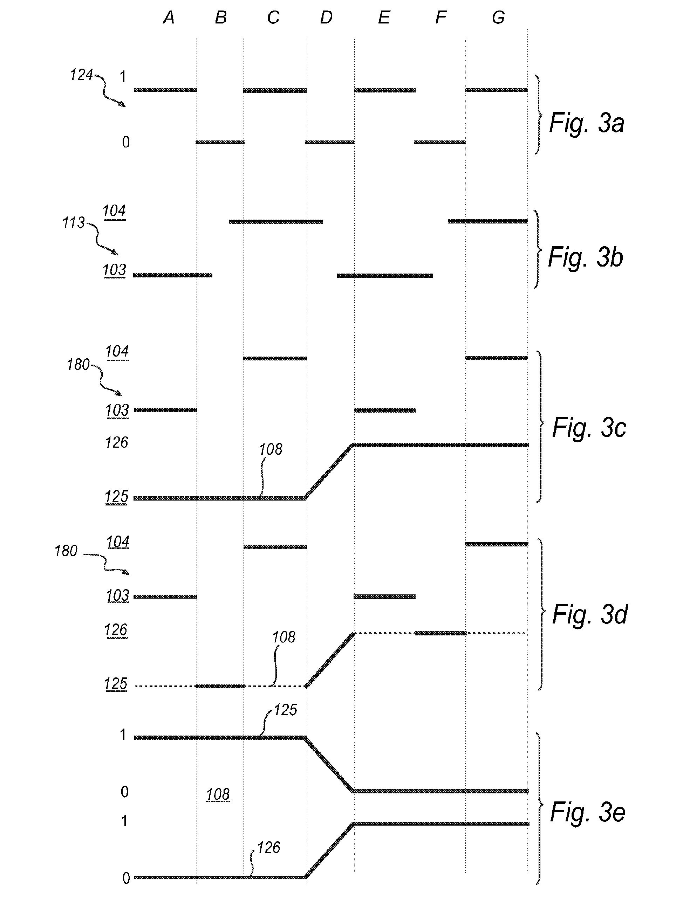

Attention is now drawn to figures 3a - 3e which illustrate the different steps of the method for executing gear changes in the above mentioned gear arrangement of the hybrid electric vehicle. It is noted in this regard that a gear change from a lower gear ratio to a higher one is made generally based on the knowledge for each vehicle propelling machine under which speed of rotation it functions well. An internal combustion engine typically functions well in a range from approx. 2 000 - 5 000 rounds per minute, while an electric machine may function well from very low speeds of rotation up to approx. 6 - 8 000 rounds per minute or even higher. Thus a gear change from a lower gear ratio to a higher gear ratio is generally made at a point for each respective vehicle propelling machine when it has reached its upper speed range in order to reduce the speed of rotation while continuing propelling and even accelerating the vehicle.
Figure 3a illustrates the condition for the launch clutch 124 in its engaged condition 1, in which torque may be transferred through the launch clutch 124, and in its disengaged condition 0 in which no torque is transferred.
Figure 3b illustrates whether the shift sleeve 113 is engaged to the first input gear set 103 or to the second input gear set 104, during the different stages A - G.
Figure 3c illustrates, in combination, which input gear wheel, *i.e.* whether the first or second gear, the first input gear set 180 is connected to, as well as which clutch 125 or 126 the first output gear set 108 is connected to, depending on the different stages A - G, when the engine 101 as well as the electric machine 102 propel the vehicle.
Figure 3d is similar to Figure 3c, but illustrates when the engine 101 primarily propels the vehicle by itself. Figure 3d further illustrates in which stages the electric machine 102 is arranged to propel the vehicle in order to continuously provide a torque through the first output gear set 108 when a gear change is executed by the first input gear set 180, which is illustrated by the continuous lines. The dashed lines illustrate the modes where the electric machine 102 may receive energy to the battery 123.
Figure 3e illustrates when the first clutch 125 and the second clutch 126 of the first output gear set 108 respectively are engaged 1 or disengaged 0.

The vertical dashed lines illustrate different stages of the gear box or transmission. A, C, E and G illustrates the first, second, third and fourth gears, respectively, and B, D and F illustrates the period between the gears, *i.e.* when the vehicle prepares for a higher or lower gear.

Figures 3a, 3b, 3c and 3e illustrate, in combination, the hybrid mode of operation as earlier described, which is when the engine 101 and electric machine 102 both propels the vehicle. Figures 3a, 3b, 3d and 3e illustrate, in combination, the mode when the engine 101 primarily propels the vehicle and the electric machine 102 may receive energy from the engine 101.

Now referring to Figures 3a - 3c, the method for changing from the first gear A to the fourth gear G, with the engine 101 as well as the electric machine 102 propelling the vehicle, will be described.

When driving in lower speeds, *i.e.* in the first gear A, the launch clutch 124 is engaged 1, thus providing a connection between the engine 101 and the first input gear set 180, such that the engine 101 propels the vehicle. The shift sleeve 113 is engaged to the first input gear wheel 103 such that the torque 10, 20, 40, 50, 60 is transmitted through the first output shaft 114 via the first output gear wheel 105 and the first input gear wheel 103 and further through the first output gear set 108, where the first output gear set 108 is connected to its numerically lowest gear ratio by locking the ring gear 109 to the stationary member by means of the first clutch 125. Furthermore, the electric machine 102 also propels the vehicle, such that the engine 101 and the electric machine 102 cooperate with each other.

When preparing for changing B from the first gear A to the second gear C, the launch clutch 124 is disengaged 0, hence the first input torque 10, which is received from the engine 101, is generally reduced to zero. Thereafter, the shift sleeve 113 may be moved from the first input gear wheel 103 to the second input gear wheel 104 by synchronizing the first 103 and second 104 input gear wheels, such that they obtain similar angular velocity. Also, during the period of moving the shift sleeve 113, the electric machine 102 continues to propel the vehicle, such that a continuous torque 50 is transferred through the first output gear set 108. Furthermore, when the shift sleeve 113 is in its new position, *i.e.* engaged to the second input gear wheel 104, the launch clutch 124 is engaged 1, thus again providing a connection between the engine 101 and the first input gear set 180 such that the engine 101, in combination with the electric machine 102, propels the vehicle, but in a numerically higher gear ratio.

When thereafter preparing for changing D from the second gear C to the third gear E, the procedure for changing gear in the first input gear set 180 is as stated above but vice versa, *i.e.* the launch clutch 124 is disengaged 0 and the shift sleeve 113 is moved from the second input gear wheel 104 to the first input gear wheel 103, thereafter engaging 1 the launch clutch 124, thus providing a numerically lower gear ratio for the first input gear set 180. However, in combination to the gear change in the first input gear set 180, the first output gear set 108 is also generally simultaneously changed, but to a numerically higher gear ratio. The gear change in the first output gear set 108 is executed by gradually disengaging 0 the first clutch 125 as well as gradually engaging 1 the second clutch 126 such that the first output gear set 108 continuously slips from the numerically lower gear ratio to the numerically higher gear ratio. The electric machine 102 continuously propels the vehicle and thereby the torque 50, 60 is continuously transferred through the first output gear set 108. This gear change, from the second gear C to the third gear E, may be made such that the gear ratio change in the first input gear set 180 is not performed generally simultaneously as the gear ratio change in the first output gear set 108, as long as the launch clutch 124 is disengaged 0 during the whole procedure.

When finally preparing for changing F to the top gear, *i.e.* the fourth gear G in the described embodiment, the procedure for the first input gear set 180 is similar to the changing from the first gear A to the second gear C previously described, and will therefore not be elaborated further. The first output gear set 108 is, when driving in the third gear E, in its numerically higher gear ratio, such that the second clutch 126 is engaged 1. When changing to the fourth gear G, the first output gear set 108 continues in its numerically higher gear ratio, such that the second clutch 126 is engaged 1 and the electric machine 102 continuously propels the vehicle through the entire gear shift in order to achieve a continuous torque 50, 60 through the first output gear set 108.

The above described method is for changing gears stepwise from the first gear A to the fourth gear G. However, the person skilled in the art realizes that changing gear from the fourth gear G to the first gear A, the procedure is executed in the same manner, but vice versa, and therefore that procedure will not be described further.

Now referring to Figures 3a, 3b, 3d and 3e, the method for changing from the first gear A stepwise to the last gear G with the engine 101 primarily propelling the vehicle, and the electric machine 102 mainly receiving energy from the engine 101, will be described.

The procedure for changing gear with the engine 101 primarily propelling the vehicle and the electric machine 102 mainly receiving energy from the engine 101 is similar as the above described method with reference to Figures 3a - 3c, and Figure 3e. However, since instead the engine 101 primarily propels the vehicle by itself, the electric machine 102 behaves differently compared to the above description.

When the vehicle is propelled by the engine 101, *i.e.* in gear A, C, E and G, the electric machine 102 may receive energy to its batteries 123 (illustrated by the dashed lines of the lower part of Figure 3d), according to the above description of the charging mode of operation. However, in order to continuously propel the vehicle and provide a torque 50, 60 through the first output gear set 108, the electric machine 102 may instantly change mode from a charging mode of operation to an electric propelling mode of operation, when the launch clutch 124 is in its disengaged position 0, which is between the changing of gears, *i.e.* in the stages B, D and F (illustrated by the continuous lines of the lower part of Figure 3d). It is noted that the electric machine 102 not necessarily must receive energy to the batteries 123 during stages A, C, E and G according to this embodiment, but may be left to only follow the motion of the engine 101, although such a mode of operation may be less advantageous.

Now referring to Figure 3e, which illustrates the conditions for the first 125 and second clutches 126 of the first output gear set 108, for the different stages A - G, when changing gears in the above described transmission.

When driving in the first A and second gear C, the first clutch 125 is engaged 1 and the second clutch 126 is disengaged 0. When preparing to change D to the third gear E the first clutch 125 gradually disengage 0 and at the same time the second clutch 126 gradually engages 1, such that the gear change is executed continuously and thereby the torque 50, 60 is also continuously transferred through the first input gear set 108.

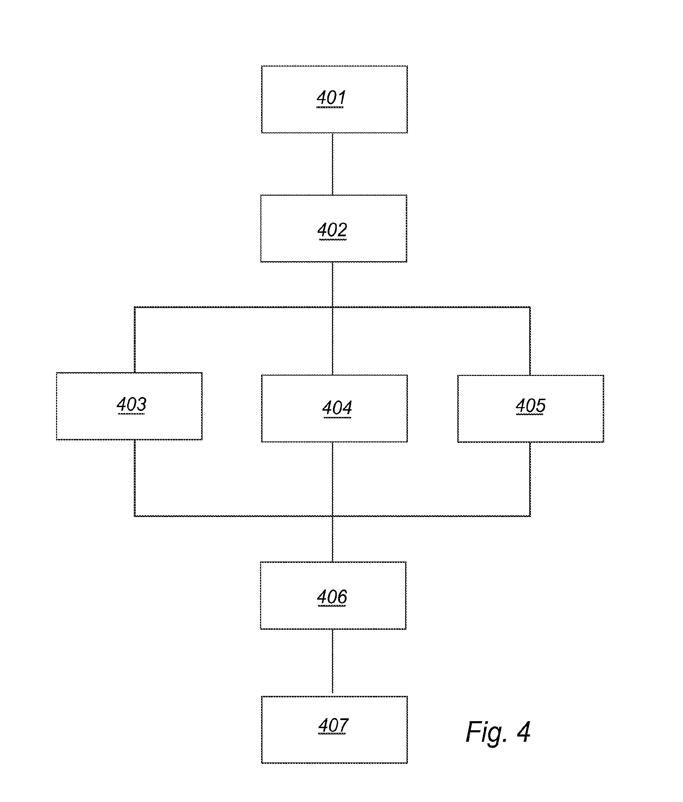

Finally, to summarise the method for executing a gear change in the above mentioned vehicle, and in more particular the gear change between the second gear C and the third gear E, a flow-chart is illustrated in Figure 4 schematically showing the steps of the method.

In the first step 401, the vehicle is driving in the second gear C, using either one or both of its propelling machines 101, 102. When the vehicle arrives at a speed suitable for a higher gear, in this case the third gear E, the vehicle prepares for a gear change.

In the next step 402, the launch clutch 124 is disengaged 0, the vehicle is in the gear change mode D. The torque 10 received from the engine 101 is generally reduced to zero. The electric machine continues to, or starts to propel the vehicle in order to maintain the torque 50, 60 through the first output gear set 108.

When the launch clutch is disengaged, the third 403, fourth 404 and fifth step 405 occur approximately simultaneously.

In the third step 403, the shift sleeve is moved from the second input gear wheel 104 to the first input gear wheel 103 by synchronizing the first 103 and second 104 gear wheels such that they obtain similar angular velocity.

In the fourth step 404, the first clutch 125 is gradually disengaged 0, and in the fifth step 405 the second clutch 126 is gradually engaged 1, thus a torque is continuously transferred through the first output gear set 108. As an alternative embodiment the input torque may be varied in order to achieve generally constant tractive force on the wheels of the vehicle. In yet another embodiment the input torque may be varied in order to reach specific levels of accelerations before and after a gear change. In the next step 406, when the first input gear set 180 has changed to a numerically lower gear ratio and the first output gear set 108 has changed to a numerically higher gear ratio, the launch clutch 124 is engaged 1.

Finally, in the last step 407, the vehicle is driving in its third gear.

Within the scope of the present invention other embodiments may be contemplated. Such may be to have more gear ratios on the first input gear set 180. Such additional gear ratios may be achieved by including additional pairs of meshing gear wheels on the first input shaft 112 and the first output shaft 114 adjacent the ones already present. The inventive method may in such a case be adjusted to take this/these new gear ratio(s) into account, such that a gear change is achieved having gear ratios in a numerically stepwise ascending sequence from the lowest to the highest one. As an example, one additional pair of meshing gear wheels inserted to the right in the Figure 1 embodiment with all other features remaining similar, would result in a total of 6 gear ratios between the vehicle and the ground. In this example the additional gear ratio would become a value numerically higher than the gear ratio for the pair of meshing gear wheels 104 and 106. The method for executing a gear change in such an embodiment would be to keep the first output gear set 108 in its first position as in stages A - C in Figure 3c until the first input gear set 180 has gone through not only the first gear and the second gear, but also the additional gear before changing the first input gear 180 back to its first gear again and changing the first output gear set 108 into its numerically higher gear ratio, corresponding to stage D in Fig 3c. Other gear ratios and locations of the additional gear(s) may apply resulting in correspondingly modified methods.

Another embodiment of the present invention may be not to have a planetary gear set as the first output gear set 108, but another type still resulting in a two gear ratio-gear set. More gear ratios in the first output gear set 108 may also be applicable. Furthermore, if the first output gear set still is a planetary gear set it may be advantageous to use the different nodes 109, 110 and 111 therein in a different manner. In such a case the two clutches 125 and 126 would act correspondingly different resulting in different locking actions between the nodes.

Furthermore, in another embodiment of the present invention, the change of gears may be executed differently than the above mentioned stages A - G, *i.e.* in a different sequence depending on the gear ratios of the first input gear set 180 and the first output gear set 108. For example, the stage of changing from the first gear to the second gear may be executed by changing gear on the first output gear set 108 and keep the shift sleeve 113 engaged with the first input gear wheel 103. When changing from the second gear to the third gear E, the shift sleeve 113 is moved to the second input gear wheel 104 simultaneously to a gear change in the first output gear set 108. When finally changing from the third gear to the fourth gear, the shift sleeve remains engaged to the second input gear wheel 104, but the first output gear wheel 108, once again, shift gear.

It is noted that when driving a vehicle not all gears from a first gear to a last gear, or in the opposite direction, must be used. For instance when having four gears from a first gear to a fourth gear the vehicle may start on the first gear, changing to the second one and driving on this gear for a greater range of vehicle propelling machine speed than otherwise usual, and then directly change to the fourth gear. In such a case the first output gear set 108 is making a gear change from the lower to the higher gear ratio, but the first input gear set 180 never makes any change from its higher to its lower gear ratio to achieve the third gear ratio. The opposite may also apply, *i.e.* that the vehicle makes a gear change from the fourth gear directly to the second gear. Other embodiments may apply, such as changing from gear one, to gear three and finally to gear four, and back again.

Although exemplary embodiments of the present invention have been described herein, it should be apparent to those having ordinary skill in the art that a number of changes, modifications or alterations to the invention as described herein may be made. Thus, the above description of the various embodiments of the present invention and the accompanying drawings are to be regarded as non-limiting examples of the invention and the scope of protection is defined by the appended claims. Any reference signs in the claims should not be construed as limiting the scope.

## Claims

1. A method for executing a gear change in a vehicle, wherein said vehicle comprises first and second vehicle propelling machines (101, 102) and a first input gear set (180) and a first output gear set (108), each gear set (180, 108) having two numerically different gear ratios, which gear sets (180, 108) are coupled in series, such that each gear set (180, 108) has one gear ratio engaged in order to propel said vehicle, wherein said first input gear set (180) operates on both of said vehicle propelling machines (101, 102) and said first output gear set (108) operates on said second vehicle propelling machine (102), wherein the method comprises the steps of:
- changing gear ratio in said first input gear set (180) in a numerically suitable direction, and
- changing gear ratio in said first output gear set (108) in a numerically opposite direction in relation to said first input gear set (180).

2. The method according to claim 1, wherein a launch clutch (124) is arranged between said first vehicle propelling machine (101) and said first input gear set (180), said method further comprising the steps of:
- disengaging said launch clutch (124) before changing gear ratio in said first input gear set (180), and
- reengaging said launch clutch (124) after changing gear ratio in said first output gear set (108).

3. The method according to claim 2, wherein said second vehicle propelling machine (102) is continuously propelling said vehicle when said first input gear set (180) and said first output gear set (108) are changing gears in said numerically opposite directions.

4. The method according to claim 3, wherein said first output gear set (108) comprises a clutch arrangement (125, 126), wherein the method comprises the step of:
- changing gear ratio in said first output gear set (108) by slipping said clutch arrangement (125, 126), such that said first output gear set (108) is continuously transferring a torque through said first output gear set (108).

5. The method according to claim 4, wherein said clutch arrangement (125, 126) comprises first and second clutches (125, 126), one for each gear ratio in said first output gear set (108), the method further comprises the step of:
- slipping each one of said first and second clutches (125, 126) in opposite engagement directions such that one gear ratio is continuously transferred into the other gear ratio.

6. The method according to any one of claims 3 to 5, wherein the method further comprises the step of:
- starting propelling said vehicle with said second vehicle propelling machine (102) if only said first vehicle propelling machine (101) is propelling said vehicle, before changing gear ratios.

7. The method according to any of the preceding claims, wherein said vehicle is provided with only two vehicle propelling machines (101, 102).

8. The method according to any of the preceding claims, wherein said first vehicle propelling machine (101) is an internal combustion engine (101).

9. The method according to any of the preceding claims, wherein said second vehicle propelling machine (102) is an electric machine (102) functioning both as motor and generator.

10. The method according to any of the preceding claims, wherein said first input gear set (180) is an automated manual gear set (180).

11. The method according to any of the preceding claims, wherein said first output gear set (108) is a planetary gear set (108).
